# EUROPEAN PATENT APPLICATION

(11) **EP 4 597 624 A1**
(43) Date of publication of application: **06.08.2025**
(21) Application number: 23873266.3
(22) Date of filing: 27.09.2023
(51) Int. Cl.: H01M 4/525, H01M 4/505, H01M 4/131, H01M 10/0525, H01M 4/02

(54) **CATHODE ACTIVE MATERIAL FOR LITHIUM SECONDARY BATTERY, MANUFACTURING METHOD THEREFOR, AND LITHIUM SECONDARY BATTERY COMPRISING SAME**

(30) Priority: 28.09.2022 KR 20220123412
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR)
(72) Inventor: LEE, Jiho, Seoul 06194 (KR); PARK, Yoon Cheol, Seoul 06194 (KR)
(74) Representative: Pfenning, Meinig & Partner mbB
(86) International application number: PCT/KR2023/015130
(87) International publication number: WO 2024/072159

(57) **Abstract**

The present invention relates to a positive electrode active material for a lithium rechargeable battery, which is a lithium transition metal oxide containing nickel (Ni) and manganese (Mn), wherein the lithium transition metal oxide may be a single particle and has a crystal defect rate of less than 3%.

## Description

### BACKGROUND OF THE INVENTION

### FIELD OF THE INVENTION

The present invention relates to a positive electrode active material for a lithium rechargeable battery, a manufacturing method thereof, and a lithium rechargeable battery including the same, and more specifically, to a positive electrode active material for a lithium rechargeable battery is a single particle, a manufacturing method thereof, and a lithium rechargeable battery including the same.

### DESCRIPTION OF THE RELATED ART

In developing layered structure positive electrode materials for rechargeable batteries, attempts have been made to increase the nickel content. The reason for this is that by employing a higher proportion of nickel, the available capacity is higher within a certain charge and discharge voltage range. In addition, it has an advantage in terms of raw material supply compared to cobalt, a representative alternative element. For example, two-thirds of the world's cobalt mining takes place in the Democratic Republic of the Congo, and the ethical issues surrounding human rights and environmental protection raised during the mining process have been a driving force behind the movement to replace cobalt and expand nickel.

For the above reasons, layered structure composite oxide with high nickel content has gradually gained a wider position as a positive electrode material for lithium rechargeable batteries, and efforts are being made to realize excellent rechargeable batteries with even better life-span characteristics.

For example, the positive electrode material of nickel-based lithium composite oxide, that has been widely used so far has a secondary particle form composed of primary particles of several hundred nm in size. However, these secondary particle positive electrode materials have a problem in that fine cracks occur between the primary particles as charging and discharging are repeated, which degrades the life-span characteristics. To solve these problems, development is being widely conducted into single particle materials in which the primary particles are mainly independent, rather than in the form of secondary particles, which are aggregates of the primary particles.

The most common method for synthesizing in the form of a single particle is sintering at high temperatures above 850°C to enhance the growth of primary particles. However, such high temperature sintering can cause serious problems in synthesizing high nickel layered structure. Specifically, the layered structure positive electrode material is well divided into a 'layer' formed by charge-carrying elements such as lithium and a 'layer' mainly composed of transition metal elements such as nickel and cobalt, so that charging and discharging can occur smoothly when this 'layered structure' is well formed. However, when a high-temperature synthesis environment is created in a situation where the nickel content is high, nickel tends to occupy a position within the 'layer' formed by the charge-carrying elements, and if this crystallographic defect becomes severe, it causes deterioration of the performance as a positive electrode material, such as a decrease in available capacity after synthesis. Since this problem becomes more serious as the sintering temperature increases, it is difficult to implement a single particle active material in the high-nickel system in which the average particle diameter of individual primary particles exceeds 2 µm.

### SUMMARY OF THE INVENTION

To solve the above-mentioned problems, the task of the present invention is to provide an excellent single particle positive electrode active material which is not only large in particle diameter but also crystalline.

Another task of the present invention is to provide a manufacturing method of a single particle positive electrode active material having the aforementioned advantages.

Another task of the present invention is to provide a lithium rechargeable battery including the positive electrode active material.

To achieve the above-mentioned object, one embodiment of the present invention provides a positive electrode active material for a lithium rechargeable battery, which is a lithium transition metal oxide including nickel (Ni) and manganese (Mn), wherein the lithium transition metal oxide is a single particle and has a crystal defect rate of less than 3%.

The average particle diameter (Davg) of a single particle can be greater than 2.5 µm.

The ratio of the average particle diameter (Davg) of a single particle to the crystal defect rate of the positive electrode active material can be 1 µm/% or more.

The positive electrode active material can satisfy the following equation 1. Average particle diameter of single particle (Davg)/sintering temperature ≥ 5 (nm/°C)

In Equation 1, the sintering temperature refers to the temperature during sintering to form lithium transition metal oxide.

In the case of the positive electrode active material for the lithium rechargeable battery, when analyzed by ICP component, K, Li, Na, Rb, Cs, Fr or a combination thereof may be detected, and the detection amount may be 50 ppm or more.

The positive electrode active material for the lithium rechargeable battery may have a CI detection amount of less than 50 ppm during ICP component analysis.

The lithium transition metal oxide can be represented by the following formula 1.

[Chemical Formula 1] Liₐ(Ni_{b}Me_{1-b})O₂

In formula 1 above, 0.8≤a≤1.2, 0.6≤b≤0.99, and Me is Co, Mn, Al, Zr, Nb, B, P, La, Mg, Ta, Ti, W, Mo, Si, Ga, Zn, Ag, Sn, Bi, Au, Y, Ge, V, Cr, Fe or a combination thereof.

At this time, the b can be 0.9≤b≤0.99.

Another embodiment of the present invention provides a method for manufacturing a positive electrode active material for a lithium rechargeable battery, comprising the steps of forming a mixture comprising a positive electrode active material precursor including nickel and manganese and a particle growth agent; sintering the mixture to form a lithium transition metal oxide; and crushing the lithium transition metal oxide to form a lithium transition metal oxide as a single particle.

The particle growth agent may be hydroxide.

The particle growth agent may be lithium hydroxide (LiOH), sodium hydroxide (NaOH), potassium hydroxide (KOH), rubidium hydroxide (RbOH), cesium hydroxide (CsOH), francium hydroxide (FrOH) or a combination thereof.

In the step of forming the mixture, the particle growth agent can be mixed at 0.1 to 99 wt% with the entire weight of the mixture as a reference.

The sintering can be performed at temperatures ranging from 740 to 850°C.

The sintering can be performed for 2 to 36 hours.

At this time, the positive electrode active material for a lithium rechargeable battery manufactured by the manufacturing method can satisfy the following equation 1. Average particle diameter of single particle (Davg)/sintering temperature ≥ 5 (nm/°C)

In Equation 1, the sintering temperature refers to the temperature during sintering to form lithium transition metal oxide.

In the step of forming the mixture, a doping raw material is further mixed, and the doping raw material may be a compound or combination thereof including one or more of Zr, Nb, Al, B, P, La, Mg, Ta, Ti, W, Mo, Si, Ga, Zn, Ag, Sn, Bi, Au, Y, Ge, V, Cr, and Fe.

After the step of crushing the lithium transition metal oxide to form a lithium transition metal oxide as a single particle, a heat treatment step may be further included.

The heat treatment can be performed at a temperature of 250 to 750°C.

The heat treatment can be performed for 2 to 24 hours.

Another embodiment of the present invention provides a positive electrode comprising the positive electrode active material described above.

Another embodiment of the present invention provides a lithium rechargeable battery comprising the positive electrode.

A single particle positive electrode active material for a lithium rechargeable battery according to an embodiment of the present invention has a low crystal defect rate and a sufficiently large average particle diameter, so that a high energy density can be realized when manufacturing a lithium rechargeable battery.

According to another embodiment of the present invention, a manufacturing method of a positive electrode active material for a lithium rechargeable battery can lower the sintering temperature for lithium transition metal oxide synthesis by applying a particle growth agent, thereby increasing the average particle diameter of a single particle positive electrode active material and simultaneously reducing the crystal defect rate.

### BRIEF DESCRIPTION OF THE DRAWINGS

FIG. 1 is a graph showing the thermal analysis result during lithium transition metal oxide synthesis, showing a curved line showing the reactant loss as a function of temperature when KOH was not used and a curved line showing the reactant loss as a function of temperature when KOH was used.

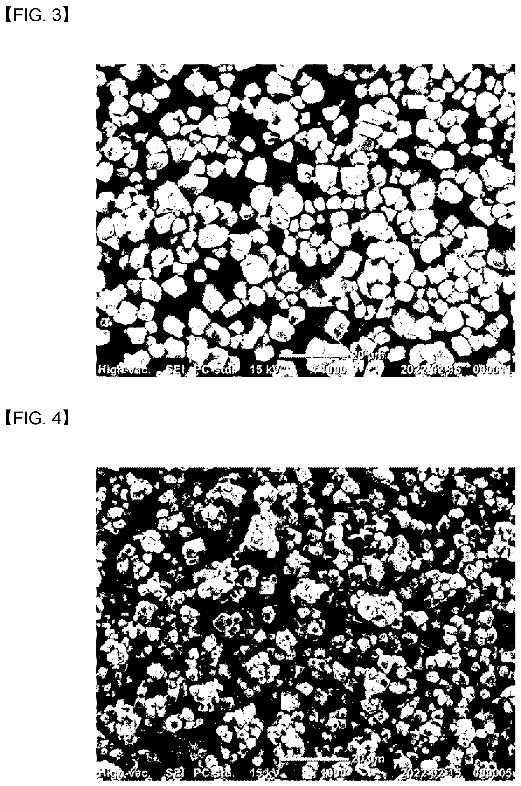

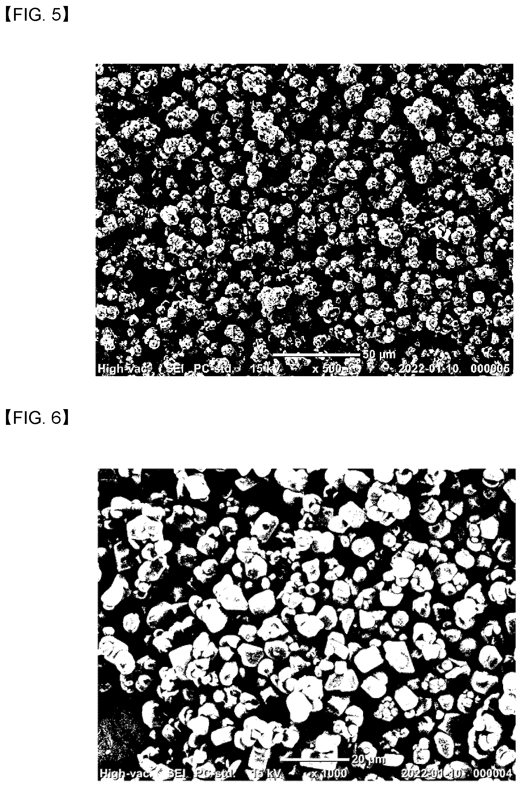

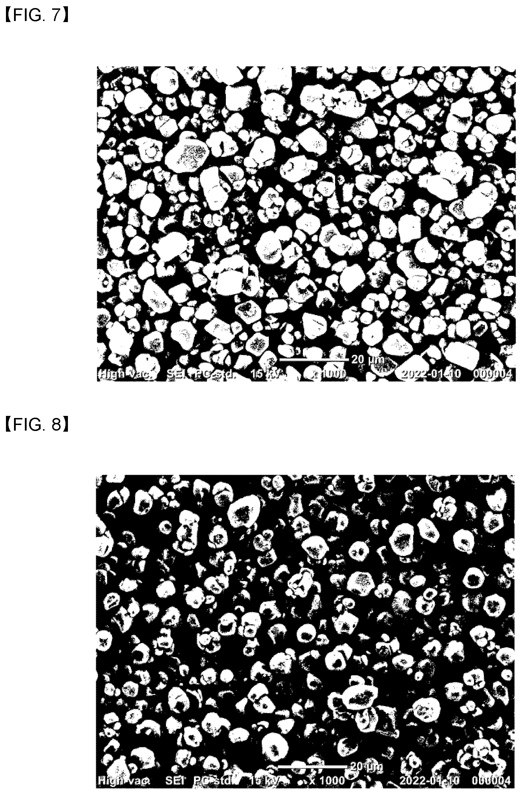

FIG. 2 to FIG. 8 show scanning electron microscope (SEM) images of positive electrode active materials manufactured according to embodiments 1 to 3 and Comparative Examples 1 to 4.

### DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including/comprising/containing" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art d°Cument and the currently disclosed contents and are not interpreted as ideal or formal meaning unless defined.

Also, unless otherwise stated, % means wt%, and 1 ppm is 0.0001 wt%.

In this specification, the term "combination thereof(s)" described in a Markush format expression means one or more mixtures or combinations selected from the group consisting of components described in the Markush format expression, and means including one or more selected from the group consisting of the components.

Below, an embodiment is described in detail so that a person of ordinary skill in the technical field to which the present invention belongs can easily carry out the present invention. As those skilled in the art would realize, the described embodiments may be modified in various different ways, all without departing from the spirit or scope of the present invention.

### 1. Positive electrode active material

One embodiment of the present invention provides a positive electrode active material for a lithium rechargeable battery, which is a lithium transition metal oxide including nickel (Ni) and manganese (Mn), wherein the lithium transition metal oxide is a single particle and has a crystal defect rate of less than 3%.

According to one embodiment of the present invention, a positive electrode active material for a lithium rechargeable battery comprises (or consists of) a single particle.

More specifically, the positive electrode active material can be divided into unassembled primary particles or coagulated secondary particles assembled from a plurality of primary particles, depending on whether the primary particles, which are unit particles, are assembled. At this time, the positive electrode active material according to the present invention is composed of unassembled primary particles, i.e., single particles.

In this way, since the positive electrode active material is composed of a single particle, it is possible to solve the problem of secondary particles, namely, the risk of negative reaction with electrolytes due to the size of the specific surface area, the occurrence of fine cracks between primary particles as charging and discharging are repeated, resulting in low structural stability and degradation of life-span characteristics.

Additionally, the positive electrode active material for a lithium rechargeable battery according to one embodiment of the present invention has a crystal defect rate of less than 3%.

In this specification, the crystal defect ratio refers to the ratio of nickel elements to charge-carrying elements such as lithium in the positive electrode material of the layered structure. These crystal defect rates can be calculated from XRD diffraction analysis data through Rietveld refinement.

More specifically, the positive electrode material of the layered structure, which is a nickel-based transition metal oxide, is divided into a layer formed by charge-carrying elements such as lithium and a layer mainly formed by transition metal elements such as nickel and cobalt, and when this layered structure is well formed, charging and discharging of the battery are smoothly performed. However, a common method for synthesizing a positive electrode material in the form of a single particle is to synthesize it by sintering at a high temperature of 850°C or higher to enhance the growth of primary particles. However, when a precursor with a high nickel content is sintered at high temperature, nickel may occupy a position in the layer formed by the charge-carrying element, lithium, which may cause crystallographic defects (i.e., poor crystalline properties), which may deteriorate the performance of the battery, such as a decrease in capacity.

The single particle positive electrode active material according to the present invention has a sufficiently large average particle diameter and a crystal defect rate of less than 3% (i.e., excellent crystalline properties) by applying a particle growth agent that enables an increase in the particle diameter of a single particle and simultaneous low-temperature sintering step during the manufacturing stage, as described below. Therefore, when manufacturing a lithium rechargeable battery using this, the capacity and initial efficiency of the battery can be very excellent.

The average particle diameter (Davg) of a single particle of the positive electrode active material may be 2.5 µm or more, and more specifically, 3 µm, 4 µm, 5 µm, 6 µm or 6.5 µm or more.

In this specification, the average particle diameter (Davg) means the average value of a total of 50 values obtained by measuring the horizontal and vertical particle diameters of 25 primary particles in a scanning electron microscope (SEM) analysis image. In the example of this specification, the analyst performed the measurement manually using image analysis software, but similar principles can be used to automate particle diameter measurement and statistics within the image to calculate more accurate and reliable particle diameter values.

As the average particle diameter (Davg) of the single particle positive electrode active material is sufficiently large, the particle strength is increased, which can suppress particle breakage during rolling and improve the rolling density. In addition, as the specific surface area decreases and lithium byproducts are reduced, the amount of gas generated by the reaction with the electrolyte is reduced, and the life-span can be improved. In addition, it can improve the capacity and initial efficiency of lithium rechargeable batteries.

In particular, the ratio of the average particle diameter (Davg) of a single particle to the crystal defect rate of the positive electrode active material can be 1 µm/% or greater, and more specifically 1.5 µm/%, 2.0 µm/% or 2.5 µm/% or greater. The ratio of the average particle diameter (Davg) of a single particle to the crystal defect rate of the positive electrode active material is a variable that can comprehensively evaluate the degree to which the crystal defect rate is small and the degree to which the average particle diameter is large. If the variable is too small, it means that the average particle diameter is too small or the crystal defect rate is too large, which may result in a decrease in the capacity and initial efficiency of the lithium rechargeable battery, a decrease in the rolling density, an increase in gas generation due to a reaction with the electrolyte, and a degradation in the life-span.

Additionally, the positive electrode active material can satisfy the following equation 1. Average particle diameter of single particle (Davg)/sintering temperature ≥ 5 (nm/°C)

In Equation 1, the sintering temperature refers to the temperature during sintering to form lithium transition metal oxide.

More specifically, the value of the equation 1 can be 5, 6, 7 or 8 or more. If the value of Equation 1 is too small, it means that the average particle diameter is too small or the sintering temperature is too high, which may result in a decrease in the capacity and initial efficiency of the lithium rechargeable battery, a decrease in the rolling density, an increase in the amount of gas generated due to the reaction with the electrolyte, and a degradation in the life-span.

Meanwhile, as described later, the positive electrode active material according to the present invention uses a particle growth agent in the manufacturing process, and thus, K, Li, Na, Rb, Cs, Fr or a combination thereof can be detected during ICP component analysis.

At this time, the detection amount can be 50, 100, 200, 400, 600 or 800 ppm or more, and 3,000, 2,500 or 2,000 ppm or less.

In addition, the positive electrode active material according to the present invention can detect CI in amounts less than 50 ppm during ICP component analysis. This is a result of using hydroxide, rather than chloride, as a particle growth agent in the active material manufacturing process, as described later.

This lithium transition metal oxide can be represented by the following formula 1.

[Chemical Formula 1] Liₐ(Ni_{b}Me_{1-b})O₂

In formula 1 above, 0.8≤a≤1.2, 0.6≤b≤0.99, and Me is Co, Mn, Al, Zr, Nb, B, P, La, Mg, Ta, Ti, W, Mo, Si, Ga, Zn, Ag, Sn, Bi, Au, Y, Ge, V, Cr, Fe or a combination thereof.

The a represents the mole ratio of lithium among lithium transition metal oxides, and can be 0.8≤a≤1.2, 0.85≤a≤1.15 or 0.9≤a≤1.1.

The b represents the mole ratio of nickel to the total moles of transition metal in the lithium transition metal oxide, and can be 0.60≤b≤0.99, 0.70≤b≤0.99, 0.80≤b≤0.99, 0.85≤b≤0.99, 0.90≤b≤0.99 or 0.90≤b≤0.95. When the nickel content in the lithium transition metal oxide satisfies the range, a positive electrode active material and a lithium rechargeable battery having high-capacity characteristics can be manufactured.

Particularly, the b can be 0.9≤b≤0.99. In other words, the nickel content can be 90 mol% or more based on the total mole number of transition metals. In general, single particle type positive electrode materials with high nickel content tend to have poor crystalline properties as they are synthesized by high temperature sintering step to increase the particle diameter, but the positive electrode active material according to the present invention can have high nickel content, large average particle diameter, and excellent crystalline properties by applying a particle growth agent during manufacturing as described below.

Meanwhile, the positive electrode active material further includes a coating layer positioned on the surface of the lithium transition metal oxide, and the coating layer may include Co, Al, Ti, W, B, F, P, Mg, Ni, Fe, Cr, V, Cu, Ca, Zn, Zr, Nb. Mo, Sr, Sb, Bi, Si, S or a combination thereof.

The thickness of the coating layer can be 1 nm to 100 nm.

### 2. Method of manufacturing a positive electrode active material

Another embodiment of the present invention provides a method for manufacturing a positive electrode active material for a lithium rechargeable battery, comprising the steps of forming a mixture comprising a positive electrode active material precursor including nickel and manganese and a particle growth agent; sintering the mixture to form a lithium transition metal oxide; and crushing the lithium transition metal oxide to form a lithium transition metal oxide as a single particle.

Hereinafter, a manufacturing method of a positive electrode active material for a lithium rechargeable battery according to another embodiment of the present invention is described in detail step by step.

First, a mixture containing a positive electrode active material precursor including nickel and manganese and a particle growth agent is formed.

By mixing a particle growth agent with a positive electrode active material precursor, the average particle diameter of a single particle positive electrode active material can be increased. Since particle growth promotion by particle growth agents works in a synthesis environment above a certain temperature, the intended effect can be achieved at any stage of the process procedure by adding the agent to the raw materials before the synthesis condition approval process. In addition, it can enable low temperature sintering to reduce the crystal defect rate of the single particle positive electrode active material (i.e., the crystalline property of the single particle positive electrode active material can be excellent).

The particle growth agent may be hydroxide. In general, the positive electrode active material precursor and lithium raw material commonly used in the manufacture of active materials are hydroxide. When hydroxide is used as a particle growth agent, (OH)⁻ is commonly included in the active material precursor and lithium raw material, which is advantageous because they become eutectic. In addition, since it does not contain heterogeneous negative ions such as SO₄²⁻, Cl⁻, etc., with the active material precursor and lithium raw material as reactant; and the lithium transition metal oxide as product; it dissolves the reactants more smoothly and promotes material movement.

For example, the particle growth agent can be lithium hydroxide (LiOH), sodium hydroxide (NaOH), potassium hydroxide (KOH), rubidium hydroxide (RbOH), cesium hydroxide (CsOH), francium hydroxide (FrOH) or a combination thereof, but is not limited thereto.

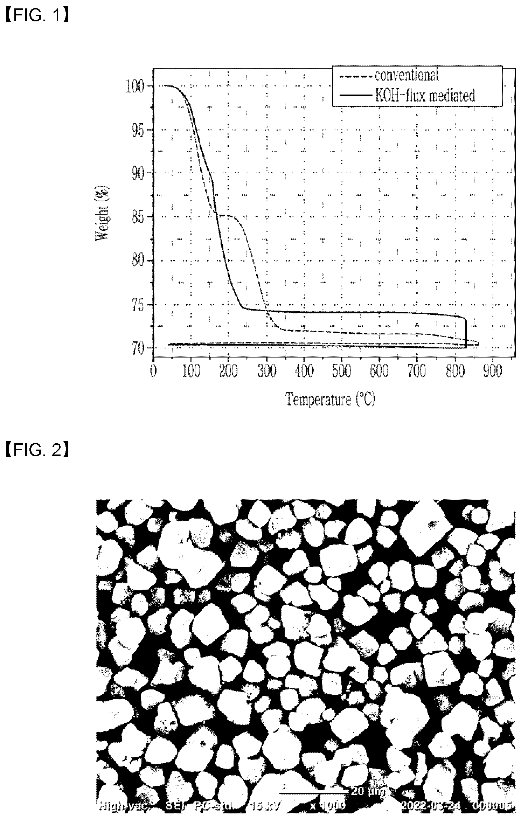

In particular, the particle growth agent may be potassium hydroxide (KOH). FIG. 1 is a graph showing the thermal analysis result during lithium transition metal oxide synthesis, showing a curved line showing the reactant loss due to an increase in temperature when KOH was not used, and a curved line showing the reactant loss due to an increase in temperature when KOH was used. Referring to FIG. 1, potassium hydroxide has a low melting point of 360°C, so the temperature change of the raw material occurring in the lithium transition metal oxide synthesis process can be advanced, thereby enabling low-temperature sintering step. Additionally, KOH tends to decompose into K₂O and H₂O when heated, and the melting point of K₂O is known to be 740°C. This is the level of the general Ni-based layered structure positive electrode synthesis temperature, and it is likely that the melting point will be further lowered by other eutectic components such as Li₂O. It is estimated that this not only lowers the synthesis temperature, but also enables particle growth to occur smoothly at low temperatures.

Meanwhile, the particle growth agent can be mixed at 0.1 to 99 wt% with the mixture entire weight as a reference, and more specifically, can be mixed at 1 to 20 wt% or 5 to 15 wt%. As the content of the mixed particle growth agent satisfies the range, the average particle diameter of the single particle positive electrode active material can effectively increase, and the synthesis temperature for implementing the target positive electrode material shape can be lowered, contributing to lowering the crystal defect rate. Meanwhile, the higher the amount of particle growth agent added, the greater the effect of increasing the particle diameter, but increasing it excessively has a detrimental effect on the efficiency of positive electrode material production. Therefore, it is necessary to determine the optimal flux ratio by considering the overall circumstances of positive electrode material production.

Particularly, the positive electrode active material according to the present invention may detect K, Li, Na, Rb, Cs, Fr or a combination thereof during ICP component analysis due to the use of the particle growth agent in the manufacturing process. The details of this are as described above, so they are omitted.

The positive electrode active material precursor may be a non-lithium precursor that does not contain lithium, or may be a precursor that contains lithium.

If the positive electrode active material precursor is a non-lithium precursor, it may be, for example, a hydroxide containing nickel and manganese. This positive electrode active material precursor can be represented by the following formula 2.

[Chemical Formula 2] Niₓ₂Co_{y2}Mn_{z2} (OH)₂

In formula 2 above,
0.6≤x2≤0.99, 0≤y2≤0.3, 0<z2≤0.3, and x2+y2+z2=1.

The x2 represents the mole ratio of nickel among the entire metal elements in the transition metal hydroxide, and can be 0.6≤x2≤0.99, 0.7≤x2≤0.99, 0.80≤x2≤0.99, 0.85≤x2≤0.99, 0.90≤x2≤0.99 or 0.90≤x2≤0.95. When the nickel content in the transition metal hydroxide satisfies the range, a positive electrode active material and a lithium rechargeable battery having high-capacity characteristics can be manufactured.

The y2 represents the mole ratio of cobalt among the entire metal elements in the transition metal hydroxide, and can be 0≤y2≤0.3, 0.01≤y2≤0.2, 0.01≤y2≤0.1, 0.02≤y2≤0.08 or 0.02≤y2≤0.06.

The z2 represents the mole ratio of manganese among the entire metal elements in the transition metal hydroxide, and can be 0<z2≤0.3, 0.01≤z2≤0.2, 0.01≤z2≤0.1, 0.02≤z2≤0.08 or 0.02≤z2≤0.06.

In addition, when the positive electrode active material precursor is a non-lithium precursor, a lithium raw material can be mixed together in the step of forming the mixture.

The lithium raw material may be lithium-containing sulfate, nitrate, acetic acid salt, carbonate salt, oxalic acid salt, citric acid salt, halide, hydroxide or oxyhydroxide, and is not particularly limited as long as it can be dissolved in water. Specifically, the lithium raw material may be Li₂CO₃, LiNO₃, LiNO₂, LiOH, LiOH · H₂O, LiH, LiF, LiCl, LiBr, Lil, CH₃COOLi, C₂H₃LiO₂, Li₂O, Li₂O₂, Li₂SO₄, Li₂SO₃, Li₃C₆H₅O₇ or a combination thereof, but is not limited thereto.

In the step of forming the mixture, doping raw material can be further mixed.

The doping raw material may be a compound or combination thereof including one or more of Nb, Zr, Al, B, P, La, Mg, Ta, Ti, W, Mo, Si, Ga, Zn, Ag, Sn, Bi, Au, Y, Ge, V, Cr, and Fe.

Next, the mixture is sintered to form lithium transition metal oxide.

Particularly, the sintering can be performed at temperatures of 740 to 850°C. In other words, by applying a particle growth agent as described above, sintering is possible at a lower temperature than the general sintering temperature when manufacturing a single particle positive electrode active material. If the sintering temperature is too high, the problem of increasing the crystal defect rate of the positive electrode active material may occur, and if the sintering temperature is too low, the problem of not being able to obtain a positive electrode active material with a sufficient particle diameter may occur.

The sintering step can be divided into primary sintering step and secondary sintering step, depending on the need.

More specifically, primary sintering step can highly promote particle growth by being performed at a temperature of 800 to 850°C at the beginning of sintering. Subsequently, secondary sintering step is performed at a temperature of 250 to 800°C after sintering to induce crystal recovery, or in other words, to reduce the crystal defect rate.

The sintering step can be performed for 2 to 36 hours, more specifically for 5 to 15 hours. If the sintering time is too short, the synthesis reaction may not be fully completed or the crystal structure may not develop sufficiently, and if the sintering time is too long, the productivity may be poor.

The sintering can be performed in an oxygen atmosphere. When high concentration nickel (Ni-rich) positive electrode active material with high Ni content is sintered at high temperature for a long period of time, a cation mixing occurs in which Ni²⁺ is positioned in the lithium layer in the layer-by-layer crystal structure during the sintering process. Therefore, it is preferable to synthesize the positive electrode active material under an oxygen atmosphere to prevent this.

Next, the lithium transition metal oxide is crushed to form a lithium transition metal oxide as a single particle.

Through the crushing process, the agglomeration of the synthesized lithium transition metal oxide can be released, thereby forming a lithium transition metal oxide as a single particle.

The crush method is not particularly limited and can be performed according to a general crush method in the art. For example, the jet-mill process can be used.

At this time, the positive electrode active material for a lithium rechargeable battery manufactured by the above method can satisfy the following equation 1. Average particle diameter of single particle (Davg)/sintering temperature ≥ 5 (nm/°C)

In Equation 1, the sintering temperature refers to the temperature during sintering to form lithium transition metal oxide.

More specifically, the value of the equation 1 can be 5, 6, 7 or 8 or more. The benefits of satisfying this are as described above, so we will omit them.

Next, after the step of forming a lithium transition metal oxide as a single particle, a step of washing and filtering the lithium transition metal oxide may be further included.

The purpose of the wash is to remove a residue of particle growth agent and residual lithium present on the surface of a positive electrode active material. More specifically, lithium transition metal oxides containing a high concentration of nickel are structurally unstable compared to lithium transition metal oxides with a low nickel content, and thus more lithium byproducts, such as unreacted lithium hydroxide or lithium carbonate, are generated during the manufacturing process. When a large amount of lithium byproduct exists in the positive electrode active material, the lithium byproduct and the electrolyte react to generate gas and cause swelling, which significantly deteriorates the high temperature stability. Therefore, a washing process can be further performed to remove lithium byproducts from lithium transition metal oxide containing high concentration nickel.

The washing method is not particularly limited and can be performed according to methods commonly known in the art within a range where performance degradation does not occur.

Specifically, the washing can be performed by a method of adding lithium composite transition metal oxide to a washing solution such as distilled water or public water and stirring it. At this time, the temperature of the washing liquid used in the washing may be preferably 5 to 50 °C, rather than 1 to 80 °C, and the washing time may be 3 to 60 minutes, rather than preferably 5 to 40 minutes. When the temperature of the washing solution and the washing time satisfy the range, the residual lithium on the lithium transition metal oxide surface can be effectively removed.

The filtration is to separate the lithium transition metal oxide during the washing process and the solid-phase lithium transition metal oxide in the stirred washing solution.

After the washing and filtration steps, a drying step may be further included.

The drying is to remove residual lithium and residual moisture in the solid-phase separated lithium transition metal oxide.

The drying method is not particularly limited and can be performed according to a method commonly known in the art within a range where performance degradation does not occur. For example, the drying can be performed by a vacuum-dry method.

At this time, the drying can be performed at a temperature of 110 to 170°C, and more specifically, at a temperature of 120 to 160°C.

Additionally, the drying can be performed for 2 to 24 hours, and more specifically for 8 to 16 hours.

Next, a heat treatment step may be further included.

Through the heat treatment, there is an advantage of recovering the chemical structure of the positive electrode material surface damaged during the washing process.

The heat treatment can be performed at temperatures ranging from 250 to 800°C. If the heat treatment temperature is too low, the problem of not being able to properly recover the positive electrode material surface chemical structure may occur, and if the heat treatment temperature is too high, the problem of crystalline damage may occur.

The heat treatment can be performed for 2 to 24 hours, or more specifically for 4 to 18 hours or 5 to 12 hours. If the heat treatment time is too short, the problem of not sufficiently achieving the intended effect may occur, and if the heat treatment time is too long, the problem of being detrimental to the productivity of the positive electrode material may occur.

The heat treatment can be performed in an oxygen atmosphere.

### 3. Positive electrode

Another embodiment of the present invention provides a positive electrode comprising the positive electrode active material described above.

The above positive electrode may include a positive electrode current collector and a positive electrode active material layer disposed on the positive electrode current collector, and the positive electrode active material layer may include the above-described positive electrode active material.

The above positive electrode current collector is not particularly limited as long as it is conductive and does not cause a chemical change in the battery, and for example, stainless steel, aluminum, nickel, titanium, sintering carbon, or aluminum or stainless-steel surface-treated with carbon, nickel, titanium, silver, etc. can be used. In addition, the positive electrode current collector may typically have a thickness of 3 to 500 µm, and fine protrusions and depressions may be formed on the surface of the positive electrode current collector to increase the adhesive strength of the positive electrode active material. For example, it can be used in various forms such as films, sheets, foils, nets, porous bodies, foams, and non-woven bodies.

The above positive electrode active material layer may optionally include a binder and/or a conductive material together with the above-described positive electrode active material.

The above binder serves to improve the adhesion between positive electrode active material particles and the adhesion between the positive electrode active material and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluoro-rubber, or various copolymers thereof, and one of these may be used alone or a mixture of two or more thereof, but the present invention is not limited thereto. The above binder may be included in an amount of 1 to 30 wt% based on the total weight of the positive electrode active material layer.

The above-mentioned conductive material is used to provide conductivity to the electrode, and can be used without special restrictions in the battery as long as it does not cause chemical change and has electronic conductivity. Specific examples include graphite such as natural graphite or artificial graphite; carbon-based materials such as carbon black, acetylene black, Ketjen black, channel black, furnace black, lamp black, summer black, and carbon fiber; metal powder or metal fiber such as copper, nickel, aluminum, and silver; conductive whiskers such as zinc oxide or potassium titanate; conductive metal oxides such as titanium oxide; or conductive polymers such as polyphenylene derivatives, and the like, and one of these may be used alone or a mixture of two or more may be used, but the present invention is not limited thereto. The above-mentioned conductive material may typically be included in an amount of 1 to 30 wt% based on the total weight of the positive electrode active material layer.

The above positive electrode can be manufactured according to a conventional positive electrode manufacturing method.

Specifically, the positive electrode can be manufactured by applying a composition for forming a positive electrode active material layer, which includes a positive electrode active material and optionally a binder, a conductive material, or a solvent, on a positive electrode current collector, and then drying and rolling. At this time, the types and contents of the positive electrode active material, binder, and conductive material are as described above.

The solvent may be a generally-used solvent in the relevant technical field, and may include dimethyl sulfoxide (DMSO), isopropyl alcohol (isopropyl alcohol), N-methylpyrrolidone (NMP), acetone, or water, and one of these may be used alone or a mixture of two or more may be used. The amount of the solvent used is sufficient to dissolve or disperse the positive electrode active material, conductive material and binder, taking into consideration the coating thickness and manufacturing yield of the slurry, and to have a viscosity that can exhibit excellent thickness uniformity during subsequent coating for manufacturing the positive electrode.

Alternatively, the positive electrode may be manufactured by casting the composition for forming the positive electrode active material layer on a separate supporter, peeling the film from the supporter, and laminating the resulting film on a positive electrode current collector.

### 4. Lithium rechargeable battery

Another embodiment of the present invention provides a lithium rechargeable battery comprising the positive electrode described above.

Particularly, the lithium rechargeable battery according to the present invention may have an initial charge capacity of 240 mAh/g or 245 mAh/g or more, an initial discharge capacity of 195 mAh/g or 199 mAh/g or more, and an initial efficiency of 80% or more.

The lithium rechargeable battery may more specifically include the above-mentioned positive electrode; a negative electrode positioned opposite the positive electrode; a separator interposed between the positive electrode and the negative electrode; and an electrolyte.

Additionally, the lithium rechargeable battery may further selectively include a battery container that accommodates an electrode assembly of a positive electrode, a negative electrode, and a separator; and a sealing member; that seals the battery container.

The negative electrode may include a negative electrode current collector and a layer of negative electrode active material positioned on the negative electrode current collector.

The negative electrode current collector is not particularly limited as long as it has high conductivity and does not cause chemical changes in the battery, and examples thereof include copper, stainless steel, aluminum, nickel, titanium, sintering carbon, copper or stainless-steel surface-treated with carbon, nickel, titanium, silver, etc., aluminum-cadmium alloy, etc. Additionally, the negative electrode current collector can typically have a thickness of 3 to 500 µm, and, like the positive electrode current collector, can form fine protrusions and depressions on the current collector surface to strengthen the bonding strength of the negative electrode active material. For example, it can be used in various forms such as film, sheet, foil, net, porous body, foam, and non-woven fabric.

The negative electrode active material layer may selectively include a binder and a conductive material together with the negative electrode active material. The negative electrode active material layer may be manufactured by, for example, applying a composition for forming a negative electrode active material layer, including a negative electrode active material and selectively a binder and a conductive material, onto a negative electrode current collector and drying the composition, or by casting a composition for forming a negative electrode active material layer onto a separate supporter and then laminating the resulting film on a negative electrode current collector by peeling the film off from the supporter.

A compound capable of reversible intercalation and deintercalation of lithium can be used as the negative electrode active material. Specific examples include carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy or Al alloy; metallic oxides capable of doping and dedoping lithium, such as SiO_{β} (0 < β < 2), SnO₂, vanadium oxide, lithium vanadium oxide; or composite materials including the metallic compound and carbonaceous materials, such as Si-C composite or Sn-C composite, and any one of these, or a mixture of two or more thereof, may be used. Additionally, thin film of lithium metal can be used as the negative electrode active material. Additionally, both low-crystalline carbon and high-crystalline carbon can be used as carbon materials. Representative low-crystalline carbons include soft carbon and hard carbon, and representative high-crystalline carbons include amorphous, plate-like, spherical-shaped or fiber-shaped natural graphite or artificial graphite, Kish graphite, thermal decomposition carbon (pyrolytic carbon), mesophase pitch-based carbon fiber, meso-carbon microbeads, mesophase pitches, and high-temperature sintering carbons such as petroleum or coal tar pitch derived cokes.

The binder and conductive material may be the same as those described above for the positive electrode.

The separator separates the negative electrode and the positive electrode and provides a passage for lithium ions to move. If it is a separator that is usually used in lithium rechargeable batteries, it can be used without any special restrictions. It is preferably one that has low resistance to ion movement of the electrolyte and excellent wetting properties for electrolytes. Specifically, a porous polymer film, for example, a porous polymer film manufactured from a polyolefin polymer such as an ethylene homopolymer, a propylene homopolymer, an ethylene/butene copolymer, an ethylene/hexene copolymer, and an ethylene/methacrylate copolymer, or a stacking structure of two or more layers thereof can be used. Additionally, conventional porous non-woven fabrics, such as non-woven fabrics made of high melting point glass fibers, polyethylene terephthalate fibers, etc., may also be used. In addition, a coated separator containing a ceramic component or polymer material may be used to secure heat resistance or mechanical strength, and may be selectively used as a single-layer or multi-layer structure.

The electrolyte may include, but is not limited to, organic liquid electrolytes, inorganic liquid electrolytes, solid polymer electrolytes, gel-type polymer electrolytes, solid inorganic electrolytes, and molten-type inorganic electrolytes that can be used in the manufacture of lithium rechargeable batteries.

Specifically, the organic liquid electrolyte may include an organic solvent and a lithium salt.

Any organic solvent that can act as a medium through which ions involved in the electrochemical reaction of the battery can move can be used without any special restrictions. Specifically, the organic solvent includes ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon solvents such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), and propylene carbonate (PC); alcohol-based solvents such as ethanol and isopropyl alcohol; nitriles such as R-CN (R is a hydrocarbon group with a linear, branched or cyclic structure of C2 to C20, and may include a double bond, a aromatic-ring or ether bond); amides such as dimethyl formamide; dioxolanes such as 1,3-dioxolane; or sulfolanes, etc. can be used. Among these, a carbonate solvent is preferable, and a mixture of a cyclic carbonate (e.g., ethylenecarbonate or propylenecarbonate, etc.) with high ionic conductivity and high dielectric constant that can improve the charging and discharging performance of the battery and a low-viscosity linear carbonate compound (e.g., ethylmethylcarbonate, dimethylcarbonate or diethylcarbonate, etc.) is more preferable. In this case, cyclic carbonate and linear carbonate can be mixed and used in a volume ratio of about 1:1 to about 1:9 to achieve excellent electrolyte performance.

The lithium salt can be used without any special restrictions as long as it is a compound that can provide lithium ions used in a lithium rechargeable battery. Specifically, the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used. It is recommended to use the lithium salt concentration within the range of 0.1 to 2.0 M. When the concentration of lithium salt is within the range, the electrolyte can exhibit excellent electrolyte performance because it has appropriate conductivity and viscosity, and lithium ions can move effectively.

In addition to the electrolyte components, the electrolyte may further contain one or more additives, such as haloalkylenecarbonate compounds such as difluoro ethylenecarbonate, pyridine, triethylphosphite, triethanolamine, cyclic ether, ethylene diamine, n-glyme, hexamethylphosphorous triamide, nitrobenzene derivative, sulfur, quinone imine dye, N-substituted oxazoleridinone, N,N-substituted imidazoleridine, ethylene glycol dialkyl ether, ammonium salts, pyrrole, 2-methoxy ethanol or trichloride aluminum, for the purpose of improving the life-span characteristics of the battery, suppressing battery capacity decrease, and improving the discharge capacity of the battery. At this time, the additive can be included in an amount of 0.1 to 5 wt% relative to the total weight of the electrolyte.

Below, an implementation example of the present invention is described in more detail through embodiment or example. However, the following embodiment is only a preferable embodiment, and the present invention is not limited by the following embodiment.

### Embodiment 1

### (1) Manufacturing of a positive electrode active material

Ni_{0.94}Co_{0.05}Mn_{0.01}(OH)₂ 1691 g, LiOH-H₂O 808.6 g, ZrO₂ 4.483 g, KOH 186.0 g were placed in a mixer of appropriate size and mixed to form a mixture.

The mixture was sintered at 820°C in an oxygen atmosphere for 8 hours to form a lithium transition metal oxide sample.

Afterwards, the sintered lithium transition metal oxide sample was crushed, 30 g was taken, and stirred in 30 g of distilled water for 10 minutes. The stirred solution was subjected to solid-liquid separation using a reduced pressure filtration method. The separated solid-phase sample was vacuum dried at 140°C for 12 hours.

Afterwards, the dried sample was heat treated at 750°C in oxygen atmosphere for 5 hours.

### (2) Manufacturing of a lithium rechargeable battery

A coin half-cell lithium rechargeable battery was manufactured using the positive electrode active material manufactured by the above method. The slurry for manufacturing an electrode plate included positive electrode active material: conductive material (acetylene black): binder (PVDF, KF1120) = 96.5:1.5:2 wt%, and additional NMP (N-Methyl-2-pyrrolidone) was added for solid and slurry viscosity. The manufactured slurry was coated on Al foil using a doctor blade, dried, and rolled to manufacture a plate. At this time, the electrode loading amount was 15-16 mg/cm², and the electrode composite density was 3.5 g/cm³ or more.

The electrolyte used in the coin cell was 1M LiPF₆ in EC:DMC:EMC = 3:4:3 (vol%) + VC 3.0wt%, and a coin half-cell was manufactured using a PP separator and a lithium negative electrode 300µm.

### Embodiment 2

A positive electrode active material and a lithium rechargeable battery were manufactured in the same manner as in embodiment 1, except that the sintering temperature was 800°C.

### Embodiment 3

A positive electrode active material and a lithium rechargeable battery were manufactured in the same manner as in embodiment 1, except that the sintering temperature was 770°C.

### Comparative Example 1

A positive electrode active material and a lithium rechargeable battery were manufactured in the same manner as in embodiment 1, except that KOH was not added during mixing and the sintering temperature was 890°C.

### Comparative Example 2

A positive electrode active material and a lithium rechargeable battery were manufactured in the same manner as in embodiment 1, except that 186.0 g of Na₂SO₄ was added to the mixer instead of KOH during mixing and the temperature during sintering was 890°C.

### Comparative Example 3

A positive electrode active material and a lithium rechargeable battery were manufactured in the same manner as in embodiment 1, except that 186.0 g of NaCl was added to the mixer instead of KOH during mixing and the temperature during sintering was 890°C.

### Comparative Example 4

A positive electrode active material and a lithium rechargeable battery were manufactured in the same manner as in embodiment 1, except that 186.0 g of KCl was added to the mixer instead of KOH during mixing and the temperature during sintering was 890°C.

Tables 1 and 2 below summarize the results of Experimental Examples 1 to 3 described below.

**(Table 1)**

| Division | particle growth agent | sintering temperature (°C) | Davg (µm) | Crystal Defect Rate (%) | Davg/Crystal Defect Rate (µm/%) | Davg/sinteringte mperature (nm/°C) | K content (ppm) | CI conte nt (ppm) |
|---|---|---|---|---|---|---|---|---|
| Comparative Example 1 | - | 890 | 2.4 | 4.8 | 0.5 | 2.70 | <50 | <50 |
| Comparative Example 2 | Na₂SO₄ | 890 | 3.9 | 5.2 | 0.75 | 4.38 | <50 | <50 |
| Comparative Example 3 | NaCl | 890 | 4.2 | 4.8 | 0.88 | 4.72 | <50 | 957 |
| Comparative Example 4 | KCI | 890 | 4.1 | 5.3 | 0.77 | 4.61 | 1400 | 857 |
| embodiment 1 | KOH | 820 | 6.7 | 2.4 | 2.79 | 8.17 | 844 | <50 |
| embodiment 2 | KOH | 800 | 5.0 | 1.9 | 2.63 | 6.25 | 1700 | <50 |
| embodiment 3 | KOH | 770 | 3.0 | 1.2 | 2.50 | 3.90 | 1661 | <50 |

**(Table 2)**

| Division | Charge capacity (mAh/g) | Discharge capacity (mAh/g) | Initial efficiency (%) |
|---|---|---|---|
| Comparative Example 1 | 237.0 | 193.9 | 81.8 |
| Comparative Example 2 | 226.5 | 177.0 | 78.1 |
| Comparative Example 3 | 228.4 | 176.0 | 77.1 |
| Comparative Example 4 | 226.7 | 178.0 | 78.5 |
| embodiment 1 | 246.7 | 199.4 | 80.8 |
| embodiment 2 | 244.6 | 201.5 | 82.4 |
| embodiment 3 | 243.5 | 202.8 | 83.3 |

### Experimental Example 1: SEM image of positive electrode active material, average particle diameter (Davg) and crystal defect rate evaluation

SEM image analysis, average particle diameter (Davg), and crystal defect rate evaluation experiments were conducted on the positive electrode active materials manufactured according to Embodiments 1 to 3 and Comparative Examples 1 to 4, and the results are shown in FIG. 2 and Table 1. The specific experiment method is as follows.

### (1) Measurement of an average particle diameter (Davg)

The average particle diameter (Davg) was derived as the average of 50 values for measuring the horizontal and vertical particle diameters of 25 primary particles in the scanning electron microscope (SEM) analysis image of the positive electrode active material.

### (2) Measurement of crystal defect rate

The crystal defect rate was calculated using Rietveld refinement from XRD diffraction analysis data. More specifically, Rietveld refinement was performed on XRD diffraction analysis data using Malvern Panalytical's Highscore software. This is, in general, to calculate virtual XRD data, approximate the actual XRD data using the least square method, etc., and calculate the composition of elements positioned at the crystallographic site accordingly. The ratio of nickel within the lithium site, which can be calculated based on these calculations, was defined as the crystal defect rate.

Referring to FIG. 2, it was confirmed that all of the positive electrode active materials manufactured according to embodiments 1 to 3 and comparative examples 1 to 4 were composed of single particles with uncoagulated primary particles.

And, in the case of embodiments 1 and 2 using KOH particle growth agent, even though sintering was performed at a relatively low temperature compared to Comparative Examples 1 to 4, it was confirmed that the average particle diameter (Davg) of the single particle was 6.7 µm and 5.0 µm, respectively, which was much larger than that of Comparative Examples 1 to 4, and the crystal defect rate was 2.4% and 1.9%, respectively, which was much smaller than that of Comparative Examples 1 to 4. Meanwhile, for embodiment 3, KOH was applied, but the sintering temperature was greatly reduced to 770°C. As a result, the average particle diameter was similar to that of the Comparative Examples, but it was confirmed that the crystal defect rate was very small at 1.2%.

In addition, for embodiments 1 and 2, the average particle diameter/crystal defect rate (µm/%) was 2.79, 2.63, and the Davg/sintering temperature (nm/°C) was 8.17, 6.25, which were significantly larger than those of Comparative Examples 1 to 4. For embodiment 3, the average particle diameter/crystal defect rate (µm/%) was 2.5, which was significantly larger than that of Comparative Examples 1 to 4. However, the effect of decreasing the average particle diameter due to the decrease in sintering temperature was so large that Davg/sintering temperature (nm/°C) showed a similar level to the Comparative Example.

### Experimental Example 2: ICP component analysis evaluation of positive electrode active material

An ICP component analysis experiment was conducted on the positive electrode active materials manufactured according to Examples 1 to 3 and Comparative Examples 1 to 4, and the results are shown in Table 1.

More specifically, ARCOS ICP-OES equipment from SPECTRO was used, and component analysis was conducted according to the KS M 0032 standard. For example, the sample was first dissolved using aqua regia to make a solution, and the original solution containing the dissolved sample was diluted to an appropriate concentration to prepare an analysis solution. This analysis solution was injected into the analyzer, and when plasma was applied, the spectrum information emitted by the components in the solution was collected. The collected spectrum information was compared with a calibration curve obtained using an authentication standard material to evaluate the content of each element in the sample.

Referring to Table 1, it was confirmed that the positive electrode active material according to embodiments 1 to 3 had a high measured K detection amount due to the use of KOH particle growth agent in the manufacturing process. In addition, it was confirmed that the positive electrode active material according to Comparative Example 4 also had a high measured K detection amount by using a KCl particle growth agent. On the other hand, it was confirmed that the positive electrode active material according to Comparative Examples 1 to 3 measured a low amount of K detection because the particle growth agent did not contain K.

When examining the Cl detection amount, it was confirmed that the positive electrode active material according to embodiments 1 to 3 and comparative examples 1 to 2 did not contain Cl in the particle growth agent, so the Cl detection amount was measured low. On the other hand, the positive electrode active material according to Comparative Examples 3 and 4 was confirmed to have a high Cl detection amount of over 800 ppm when using NaCl and KCI particle growth agents, respectively.

### Experimental Example 3: Evaluation of initial capacity and initial efficiency of lithium rechargeable battery

Experiments were conducted to evaluate the initial capacity and initial efficiency of lithium rechargeable batteries manufactured according to Embodiments 1 to 3 and Comparative Examples 1 to 4, and the results are shown in Table 2.

Specifically, after manufacturing a lithium rechargeable battery, it was aged at room temperature for 10 hours and then a charging and discharging test was conducted. To evaluate the initial capacity, 200 mAh/g was used as the reference capacity, and the battery was charged to 4.25 V with a constant current of 0.2 C, then switched to a constant voltage and charged until the end current reached 0.05 C. After a rest time of 20 minutes after charging, discharge was performed at a constant current of 0.2 C with a reference capacity of 200 mAh/g until the voltage reached 3.0 V.

Referring to Table 2, in the case of Embodiments 1 to 3, where the average particle diameter, crystal defect rate, average particle diameter(Davg)/crystal defect rate or average particle diameter(Davg)/sintering temperature of the single particle positive electrode active material were appropriately controlled, it was confirmed that the initial charge capacity, discharge capacity, and initial efficiency were excellent compared to Comparative Examples 1 to 4, where this was not the case.

Although the present invention has been described above with regard to a preferably embodiment thereof, the present invention is not limited thereto, and it is possible to implement the present invention by modifying it in various ways within the scope of the patent claims and the detailed description and accompanying drawings of the invention, and this also naturally falls within the scope of the present invention.

Therefore, it can be said that the actual scope of the present invention is defined by the attached patent claims and their equivalents.

## Claims

1. A positive electrode active material for lithium rechargeable battery is:
a lithium transition metal oxide comprising nickel (Ni) and manganese (Mn),
wherein, the lithium transition metal oxide is a single particle and has a crystal defect rate of less than 3%.

2. The positive electrode active material of claim 1, wherein:
an average particle diameter (Davg) of the single particle is 2.5 µm or more.

3. The positive electrode active material of claim 1, wherein:
a ratio of the average particle diameter (Davg) of a single particle to the crystal defect rate of the positive electrode active material is 1 µm/% or more.

4. The positive electrode active material of claim 1, wherein:
the positive electrode active material satisfies the following equation 1: Average particle diameter of single particle (Davg)/sintering temperature ≥ 5 (nm/°C) in Equation 1, the sintering temperature refers to the temperature during sintering to form lithium transition metal oxide.

5. The positive electrode active material of claim 1, wherein:
in ICP component analysis, K, Li, Na, Rb, Cs, Fr or a combination thereof are detected, and the detection amount is 50 ppm or more.

6. The positive electrode active material of claim 5, wherein:
in ICP component analysis, the detection amount of Cl is less than 50 ppm.

7. The positive electrode active material of claim 1, wherein:
the lithium transition metal oxide is represented by the following formula 1:
[Chemical Formula 1] Liₐ(Ni_{b}Me_{1-b})O₂
in formula 1 above, 0.8≤a≤1.2, 0.6≤b≤0.99, and Me is Co, Mn, Al, Zr, Nb, B, P, La, Mg, Ta, Ti, W, Mo, Si, Ga, Zn, Ag, Sn, Bi, Au, Y, Ge, V, Cr, Fe or a combination thereof.

8. The positive electrode active material of claim 7, wherein:
0.9≤b≤0.99.

9. A method of manufacturing a positive electrode active material for lithium rechargeable battery, comprises:
forming a mixture comprising a positive electrode active material precursor including nickel and manganese and a particle growth agent;
forming a lithium transition metal oxide by sintering the mixture;
crushing the lithium transition metal oxide to form a lithium transition metal oxide as a single particle.

10. The method of claim 9, wherein:
the particle growth agent is hydroxide.

11. The method of claim 9, wherein:
the particle growth agent is lithium hydroxide (LiOH), sodium hydroxide (NaOH), potassium hydroxide (KOH), rubidium hydroxide (RbOH), cesium hydroxide (CsOH), francium hydroxide (FrOH) or a combination thereof.

12. The method of claim 9, wherein:
in the step of forming the mixture, the particle growth agent is mixed at 0.1 to 99 wt% with the entire weight of the mixture as a reference.

13. The method of claim 9, wherein:
the sintering is performed at a temperature of 740 to 850°C.

14. The method of claim 9, wherein:
the sintering is carried out for 2 to 36 hours.

15. The method of claim 9, wherein:
the positive electrode active material satisfies the following equation 1: Average particle diameter of single particle (Davg)/sintering temperature ≥ 5 (nm/°C) in Equation 1, the sintering temperature refers to the temperature during sintering to form lithium transition metal oxide.

16. The method of claim 9, wherein:
in the step of forming the mixture, a doping raw material is further mixed, and the doping raw material is a compound or combination thereof comprising one or more of Zr, Nb, Al, B, P, La, Mg, Ta, Ti, W, Mo, Si, Ga, Zn, Ag, Sn, Bi, Au, Y, Ge, V, Cr and Fe.

17. The method of claim 9, further comprising:
a step of heat treatment, after the step of crushing a lithium transition metal oxide to form a lithium transition metal oxide as a single particle.

18. The method of claim 17, wherein:
the heat treatment is carried out at a temperature of 250 to 750°C.

19. The method of claim 17, wherein:
the heat treatment is performed for 2 to 24 hours.

20. A positive electrode, comprises the positive electrode active material of any one of claim 1 to claim 8.

21. A lithium rechargeable battery comprises the positive electrode according to claim 20.
